# EUROPEAN PATENT SPECIFICATION

(11) **EP 3 400 850 B1**
(45) Date of publication and mention of the grant of the patent: **04.03.2020**
(21) Application number: 17170082.6
(22) Date of filing: 09.05.2017
(51) Int. Cl.: A47J 17/16

(54) **DEVICE FOR PEELING A SURFACE OF AN OBJECT AND A METHOD FOR MANUFACTURING THE DEVICE**
VORRICHTUNG ZUM SCHÄLEN EINER OBERFLÄCHE EINES OBJEKTES UND VERFAHREN ZUR HERSTELLUNG DER VORRICHTUNG
DISPOSITIF POUR PELER UNE SURFACE D'UN OBJET ET PROCÉDÉ DE FABRICATION DU DISPOSITIF

(43) Date of publication of application: 14.11.2018
(73) Proprietor: Vestel Elektronik Sanayi ve Ticaret A.S., 45030 Manisa (TR)
(72) Inventor: ÜNVER, Burak, 45030 Manisa (TR)
(74) Representative: Ascherl, Andreas

(56) References cited:
- FR-A1- 2 692 188
- US-A- 2 521 987
- US-A- 2 860 676

## Description

This invention refers to a device for peeling surface of an object according to claim 1, and a method for manufacturing the device according to claim 9.

### Background of the Invention

Each fruit or vegetable has unique shape and they are mostly asymmetrical objects (e.g. apple and potato). There can be many indentations on surface of object. Therefore, it is hard to peel them without wasting their skin by a machine or an apparatus. To optimally peel the object, the machine has to take multiple tours around the object. Current systems use fixed direction or fixed axis blades, so peeling results in incomplete removal of the skin or wasting of the skin for asymmetrical objects.

One way for peeling the objects is disclosed by Chinese Patent Application CN104323692, which discloses a fruit and vegetable peeler, which increases the efficiency of peeling the surfaces of complex fruits and vegetable. The provided fruit and vegetable peeler comprises a handle and a cutter body, the cutter body has two or more side-by-side movable sub-cutter bodies, like a bamboo raft structure, the handle is a cavity sleeve, both ends of which are open and the cross section of which is rectangular, all the sub-cutter bodies are mounted in the cavity of the sleeve type handle, the neighboring sub-cutter bodies can slide relatively, consequently, the entire edge can be formed into any curve, and thereby can be attached on the surfaces of complex fruits and vegetables, so that a large area of skin can be conveniently peeled in one step.

One other way for peeling the objects is disclosed by Chinese Patent Application CN104856550, which discloses an orange peeling device comprising: a frame, a conveying device for pushing the orange to the peeling position and fixed to the frame, a clamping device for clamping the orange and driving the orange to rotate, the peeling device, for peeling oranges, orange cutting tool ends, for the cut ends unpeeled orange, fixed to the frame, with respect to the stripping position setting.

### Object of the Invention

It is therefore the object of the present invention is to provide a self-adaptive technique for shapping the cutter according to shape and size of an object to be peeled, with minimum skin wastage.

### Description of the Invention

The before mentioned object is solved by a device of the Claim 1 and a method of manufacturing the device of claim 10.

A device for peeling surface of an object comprising an electromagnetic rod having coils, wherein the electromagnetic rod is adapted to be placed through the object via an axis passing through a center of the object, a first disc comprising a groove for allowing an access to the electromagnetic rod into the first disc, and extending one or more wires from the first disc, a set of blades made of ferromagnetic material and having a sharp edge, the set of blades arranged in near proximity to each other and bound by one or more wires passing through the blades, the blades are arranged such that the sharp edges are adapted to be tangentially placed to a surface of the object, a second disc receiving one or more wires extending from the first disc and passing through the set of blades, and a current source connected to the electromagnetic rod and adapted to supply current to the coils, the coils generate electromagnetic field in the electromagnetic rod, so that the electromagnetic rod pulls the set of blades towards itself, wherein the first disc and the second disc are adapted to be rotated such that the blades are also rotated along with the discs and adapted to peel off a skin from the surface of the object.

This provides for a technique for adapting the peeling device according to shape of the object, and also further provides with peeling off the skin of the object in one rotation, which further helps to reduce wasting of the sking of the object.

Further preferred embodiments are subject-matter of dependent claims and/or of the following specification parts.

According to a preferred embodiment of the device, wherein the second disc is adapted to be adjusted according to a size of the object.

This embodiment is beneficial as it provides for a way to adapt the device to according to the size of the object, and helps to peel objects with varying sizes, without using different peelers.

According to a further preferred embodiment of the device, the device comprises a first actuator adapted to adjust the second disc according to size of the object.

This embodiment is helpful, as it provides an easy way to adjust the second disc.

According to a further preferred embodiment of the device, the device comprises a mechanism which is adapted to adjust tension or length of the wire.

This embodiment is beneficial, as it provides a way to adjust the wires according to shape or size of the object.

According to a further preferred embodiment of the device, the device comprises a second actuator adapted to rotate at least one of the discs.

This embodiment is beneficial, as it provides an easy way to rotate the discs, eliminating manual efforts.

According to a further preferred embodiment of the device, wherein each of the blades comprises a first hole in middle of the blade and one of the wires passes through the first hole.

This embodiment is beneficial, as it helps to keep the wire/s intact and also binds the blades to avoid any unwanted movements of the blades.

According to a further preferred embodiment of the device, wherein the blade comprises a blunt edge opposite to the sharp edge and a second hole near to the blunt edge, and one of the wires passes through the second hole.

This embodiment is beneficial, as it provides another way to keep the wire/s intact and to bind the blades for avoiding any unwanted movements of the blades.

According to a further preferred embodiment of the device, wherein thickness of the blades is less than 2 mm.

This embodiment is beneficial, as smaller size of blades helps to adapt the set of blades according to the shape of the object. If the size of the blade is more than each and every part of a surface to be peeled of the object shall not be reached by the set of the blades, which shall result in either incomplete peeling or wastage of skin of the object.

According to a further preferred embodiment of the device, wherein thickness of the blades is between 1 mm to 2 mm

This embodiment is beneficial, as it provides an optimal range for the blades, as much smaller blades shall be difficult to be maintained. In cases, where some of the blades from the set of the blades turn blunt, it shall be difficult to access, and replace or provide maintenance for smaller blades which shall be less than the mentioned range.

The before mentioned object is also solved by a method of claim 10. The method for manufacturing a device for peeling surface of an object comprising steps of:
- providing a set of blades with a sharp edge,
- assembling the set of blades in parallel and in close proximity to each other, in such a way that sharp edges of all the blades are one over another, and the sharp edges are adapted to be tangentially placed to a surface of the object while peeling,
- binding the set of blades using atleast one of a wire, by passing the wires through one of the holes on the blades,
- providing a first disc which is rotatable and having a groove, and placing the first disc at a bottom side of the set of blades,
- providing a second disc which is adjustable and rotatable, and placing the second disc at top side of the set of blades,
- extending the wires from the first disc to the second disc via holes of the blades,
- providing an electromagnetic rod comprising coils, wherein the electromagnetic rod is adapted to be placed through the object via an axis passing through a center of the object, and the electromagnetic rod is further adapted to be placed into the groove, and
- providing a current source and connecting it to the electromagnetic rod, the current source is adapted to supply current to the coils, the coil generates electromagnetic field in the electromagnetic rod, so that the electromagnetic rod pulls the set of blades towards itself,
wherein the first disc and the second disc are adapted to be rotated such that the blades are also rotated along with the disc and adapted to peel off a skin from the surface of the object.

According to a further preferred embodiment of the method, the method further includes step of providing a first actuator for adjusting the second disc according to size of the object.

According to a further preferred embodiment of the method, the method further includes steps of providing a mechanism for adjusting tension or length of the wire.

According to a further preferred embodiment of the method, the method further step of providing a second actuator for rotating at least one of the discs.

According to a further preferred embodiment of the method, wherein providing each of the blades with a first hole in middle of the blade, and passing one of the wires through the first hole.

According to a further preferred embodiment of the method, wherein providing each of the blades with a blunt edge opposite to the sharp edge and a second hole near to the blunt edge, and passing one of the wires through the second hole.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

Fig. 1 shows a device for peeling surface of an object along with the object being processed by the device.
Fig. 2 shows a blade from the set of blades of the device along with the wires passing through it.

### Detailed Description of the Drawings

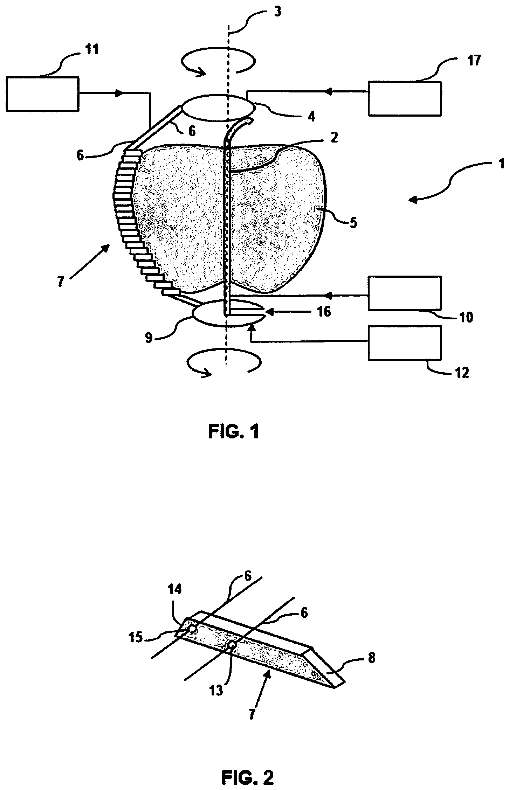

Fig. 1 shows a device 1 which is used for peeling surface of objects 5. These objects 5 can be fruits, vegetables or any other objects 5 which can be peeled. Generally, shape and size of these objects 5 are different; hence a different peeler may be required for each of the objects 5. However, device 1 of the current disclosure is self-adapting and fit for all objects 5. Also, many of the objects like potato, do not have symmetrical shape, it gets difficult for traditional peelers to peel skin of the object 5 without wasting the skins. Hence, the traditional peelers are highly inefficient for the objects 5 which have asymmetrical or irregular shape. The device 1 of current disclosure also adapts itself to peel such asymmetrical or irregular objects 5, so that to keep wastage of the skin of the object 5 minimal or none.

The device 1 includes an electromagnetic rod 2 which comprises coils, a set of blades 7, two discs 4, 9 placed on top and bottom side with respect to the set of blades 7, two wires 6 binding the discs 4, 9, and set of blades 7, a current source 10 to power the coils of the electromagnetic rod 2 to generate magnetic field in the coils. The blades 7 are made of ferromagnetic material.

The set of blades 7 are arranged in such a way that they are in close proximity to each other, and placed on one over another. Each of the blades 7 has a sharp edge 8. When the blades 7 are stacked over each other and assembled into the device 1, such that the sharp edges 8 shall be tangentially placed with respect to surface of the object 5, when the object 5 is placed into the device 1 and close fit is established onto the object 5 by the device 1. This tangential placement of the sharp edge 8 to the surface of the object 5 enables peeling operation.

There are two wires 6 which are extending from the first disc 4 up to the second disc 9. These wires 6 passes through the set of blades 7 to further bind the blades. In an alternate embodiment, there need not be two wires 6 for binding the set of blades 7 and discs 4, 9, rather there can be one wire 6 or more than two wires 6 which can be used to bind the blades 7 and the discs 4, 9.

The first disc 4 also has groove 16 which allows the electromagnetic rod 2 to slide into the groove 16. Once the electromagnetic rod 2 is placed through the object 5 via an axis 3 passing through the object 5, the electromagnetic rod 2 is guided to slide through the groove 16, which completes placement of object 1 into the device 1 and assembling of the device 1 for peeling operation.

The device 1 also includes a second actuator 12 which rotates the first disc 4 for peeling operation on application of electrical energy. In an alternate embodiment, the second actuator 12 also rotates the second disc 9 also or just the second disc 9, and not the first disc 4. In case, where either of the discs 4, 9 are only attached to the second actuator 12, the other disc 4, 9 which is not attached to the second actuator 12 also rotates along with the disc 4, 9 which is attached, due to the assembly of discs 4, 9 and wires 6 which provides a mechanical binding between the discs 4, 9. In an alternate embodiment, the second actuator 12 is not required, if there is mechanical rotating means provided, which effectuates rotation of either or both of the discs 4, 9.

As there is difference in sizes of the objects 5, the device 1 also includes a first actuator 17 for adjusting the second disc 9 according to size of the object 5. This shall help to adapt the device 1 according to size of the object 5, and further makes a close fit on the objects 5. The first actuator 17 moves the second disc 9 in three dimensional space, as it is required to fit in the object 5 between the electromagnetic rod 2 and the blades 7. In an alternate embodiment, the first actuator 17 can only move the second disc 9 only in one direction that is horizontal or vertical. However, it is recommended to move the second disc 9 in all the directions to fit in the objects which are long like carrot and radish, the objects which are round and stout, like beetroot and potato, etc. Such versatile movement of the second disc 9 provides for all object 5 fit in device 1. The first actuator 17 can be mechanical or electrical. In case the first actuator 17 is electrical, it requires supply of electrical energy to be in operation. In case, the first actuator 17 is mechanical in nature, it requires manual efforts to adjust the second disc 9. In yet another embodiment, the device 1 need not include the first actuator 17, if the device 1 is to be provided for objects which are equivalent in sizes, like orange, guava and apple.

Tension and length in the wire 6 is required to be adjusted so that the device 1 adapts according to shape and size of the object 5, and further forms a proper grip onto the object 5. To make the device adaptive to any kind of objects 5 for varying shape and sizes, like beetroot, apple, watermelon, etc., length of the wire 6 needs to be adjusted to change length of the wire 6, or tension in the wire 6. And, to adjust length or tension in the wire 6, a mechanism 11 is provided. In case the device 1 is to be used for similar size and shape objects 5, the length or tension in the wire 6 is not required to be adjusted and hence the mechanism 11 shall not be required.

This mechanism 11 can be mechanical in nature, where a user of the device 1 manually changes effective length, or tightens or loosens the wire 6. The mechanism 11 can also be electrical in nature, where a motor can be fixed to move the wire for changing effective length of the wire, or tightening or loosening the wire. The effective length of the wire 6 is the length of the wire between the two discs 4, 9. The mechanism 11 can also be automatically activated when it detects adjustment of the second disc 9 or difference in size or shape of the object 5 with respect to standard shape or size of a standard object 5. To detect shape or size of the object 5, a sensor can also be provided. When the electromagnetic rod 2 is placed through the object 5, the sensor can get functional to detect shape and size of the object. Such automatic mechanism 11 for changing length of the wire 6, or tightening or loosening of the wire 6, along with the automatic first actuator 17 for adjusting the second disc 9 provides an automatic way to create a close fit of the device 1 over the object 5, which substantially reduces manual efforts for fitting the object 5, and make the device 1 substantially user friendly.

Fig. 2 illustrates a part of the device 1; more specifically a blade 7 from the set of blades 7 with wires 6 passing through it. The blade 7 is shown with two edges, a sharp edge 8 and a blunt edge 14. The blade 7 is shown with two holes, a first hole 13 and a second hole 15. The first hole 13 is provided on middle of the blade 7, while the second hole 15 is provided near to the blunt edge 14 of the blade 7. There can be more than two holes 13, 15 to accommodate more than two wires 6, if the device 1 is provided with more than two wires 6. In one embodiment, where there is only one wire 6 is provided in the device 1, it can pass through either of the holes 13, 15, and in that case the blade 7 is provided with only one holes 13, 15 through which the wire 6 is passing. In an alternate embodiment, the holes 13, 15 are not made into the blades 7, rather the blades 7 can be bound together through any other ways, like having an extension to the wire 6 which has an opening for passing the wire.

The blades 7 are in range of 1 mm to 2 mm, so that the blades 7 shall be miniature enough to provide adaptive blades 7 which can adapt themselves according to any shape based on the shape of the object 5. The blades 7 can even be less than 1 mm, however still further miniature blades 7 makes maintenance of the blades 7 difficult. However, still the blade size of less than 2 mm works for the device 1 for effective and adaptive peeling operations.

For peeling operation, the electromagnetic rod 2 is placed through the object 5 via an axis 3 passing through a center of the object 5. Further, the electromagnetic rod 2 is guided to slide into a grove 16 of the first disc 4. Thereafter, a current is passed through the electromagnetic rod 2 via the current source 10. This leads to generation of magnetic field within the coils of the electromagnetic rod 2 and due to which the ferromagnetic blades 7 are attracted towards the electromagnetic rod 2 and pulled toward the electromagnetic rod 2. This provides for placement of the blades 7 onto the surface of the object 5, and further creates a grip of blades 7 onto the surface of the object 5 for providing efficient peeling of the skin of the object 5. Further, a second actuator 12 is used to rotate the first disc 4 to effectuate the peeling operation onto the surface of the object 5. Due to the mechanical structure of the discs 4, 9 and wires 6, the wires 6 and the second disc 9 also moves due to the movement of the first disc 4. Generally, in one round the peeling shall be completed, and once the peeling is completed, the electric current is switched off from the current source 10, which leads to disappearing of the magnetic field, which further leads the blades 7 to be at resting position or to move away from the electromagnetic rod 2, in absence of magnetic field. Thereafter, the electronic rod 2 is removed out of the groove 16, and further the electronic rod 2 is displaced out of the object 5. This provides the peeled object 5 out of the device 1 after peeling safely.

The device 1 can be used as part of peeling machines, which can be of small scale, household, or large scale.

Thus, the present invention provides for peeling fruits or vegetables by auto-adapting their shapes. The device 1 consists of cylindrical electromagnet rod 2 at inner part, small tiny ferromagnetic blades 7, two wires 6 to hold blades 7 together and discs 4, 9 to hold and move wires 6. The discs 4, 9 under and over the object 5 provides for holding and moving the wires 6, so the tension of wires 6 can be adjusted according to the shape and size of object 5. When parallel discs 4, 9 are rotated, wires 6 turn around object 5. Magnetic field is generated by applying small current to coils of the electromagnetic rod 2 and generates magnetic field, which attracts the blades 7 towards the electromagnetic rod 2 to adapt the blades 7 according to the shape of the object 5. Peeling process is completed in just one tour. After completing peeling, applied current is removed and magnetic field disappears. So, peeled object 5 can be taken out safely from the device 1.

In particular, the device 1 for peeling surface of an object 5 comprises an electromagnetic rod 2 comprising coils, wherein the electromagnetic rod 2 is adapted to be placed through the object 5 via an axis 3 passing through a center of the object, a first disc 4 comprising a groove 16 for allowing an access to the electromagnetic rod 1 into the first disc 4, and extending one or more wires 6 from the first disc 4, a set of blades 7 made of ferromagnetic material and having a sharp edge 8, the set of blades arranged in near proximity to each other and bound by one or more wires 6 passing through the blades 7, the blades 7 are arranged such that the sharp edges 8 are adapted to be tangentially placed to a surface of the object 5, a second disc 9 receiving one or more wires 6 extending from the first disc 4 and passing through the set of blades 7, and a current source 10 connected to the electromagnetic rod 2 and adapted to supply current to the coils, the coils generate electromagnetic field in the electromagnetic rod 2, so that the electromagnetic rod 2 pulls the set of blades 7 towards itself, wherein the first disc 4 and the second disc 9 are adapted to be rotated such that the blades 7 are also rotated along with the discs 4, 9 and adapted to peel off a skin from the surface of the object 5.

### List of reference numbers

- 1: device
- 2: electromagnetic rod
- 3: axis passing through center of the object
- 4: first disc
- 5: object
- 6: wire
- 7: blade
- 8: sharp edge of the blade
- 9: second disc
- 10: current source
- 11: mechanism
- 12: second actuator
- 13: first hole
- 14: blunt edge
- 15: second hole
- 16: groove
- 17: first actuator

## Claims

1. A device (1) for peeling surface of an object (5) comprising:
- an electromagnetic rod (2) comprising coils, wherein the electromagnetic rod (2) is adapted to be placed through the object (5) via an axis (3) passing through a center of the object (5);
- a first disc (4) comprising a groove (16) for allowing an access to the electromagnetic rod (1) into the first disc (4), and extending one or more wires (6) from the first disc (4);
- a set of blades (7) made of ferromagnetic material and having a sharp edge (8), the set of blades (7) arranged in near proximity to each other and bound by one or more wires (6) passing through the blades (7), wherein the blades (7) are arranged such that the sharp edges (8) are adapted to be tangentially placed to a surface of the object (5);
- a second disc (9) receiving one or more wires (6) extending from the first disc (4) and passing through the set of blades (7) ; and
- a current source (10) connected to the electromagnetic rod (2) and adapted to supply current to the coils, the coils generate electromagnetic field in the electromagnetic rod (2), so that the electromagnetic rod (2) pulls the set of blades (7) towards itself,
wherein the first disc (4) and the second disc (9) are adapted to be rotated such that the blades (7) are also rotated along with the discs (4, 9) and adapted to peel off a skin from the surface of the object (5).

2. The device (1) according to the claim 1, wherein the second disc (9) is adapted to be adjusted according to a size of the object (5).

3. The device (1) according to the claim 2 comprising a first actuator (17) adapted to adjust the second disc (9) according to size of the object (5).

4. The device according to any of the claims 1 to 3 comprising a mechanism (11) which is adapted to adjust tension or length of the wire (6).

5. The device (1) according to any of the claims 1 to 4 comprising a second actuator (12) adapted to rotate at least one of the discs (4, 9).

6. The device (1) according to any of the claims 1 to 5, wherein each of the blades (7) comprises a first hole (13) in middle of the blade (7) and one of the wires (6) passes through the first hole (13).

7. The device (1) according to any of the claims 1 to 6, wherein the blade (7) comprises a blunt edge (14) opposite to the sharp edge (8) and a second hole (15) near to the blunt edge (14), and one of the wires (6) passes through the second hole (15).

8. The device (1) according to any of the claims 1 to 7, wherein thickness of the blades (7) is less than 2 mm.

9. The device (1) according to the claim 8, wherein thickness of the blades (7) is between 1 mm to 2 mm.

10. A method for manufacturing a device (1) for peeling surface of an object (5), the method comprising:
- providing a set of blades (7) with a sharp edge (8);
- assembling the set of blades (7) in parallel and in close proximity to each other, in such a way that sharp edges (8) of all the blades (7) are one over another, and the sharp edges (8) are adapted to be tangentially placed to a surface of the object (5) while peeling;
- binding the set of blades (7) using at least one of a wire (6), by passing the wires (6) through one of the holes (13, 15) on the blades (7);
- providing a first disc (4) which is rotatable and having a groove (16), and placing the first disc (4) at a bottom side of the set of blades (7);
- providing a second disc (9) which is adjustable and rotatable, and placing the second disc (9) at top side of the set of blades (7);
- extending the wires (6) from the first disc (4) to the second disc via holes (13, 15) of the blades (7);
- providing an electromagnetic rod comprising coils, wherein the electromagnetic rod is adapted to be placed through the object via an axis passing through a center of the object, and the electromagnetic rod is further adapted to be placed into the groove; and
- providing a current source and connecting it to the electromagnetic rod, the current source is adapted to supply current to the coils, the coil generates electromagnetic field in the electromagnetic rod, so that the electromagnetic rod pulls the set of blades towards itself,
wherein the first disc and the second disc are adapted to be rotated such that the blades are also rotated along with the disc and adapted to peel off a skin from the surface of the object.

11. The method according to claim 10 comprising:
- providing a first actuator for adjusting the second disc according to size of the object.

12. The method according to any of the claims 10 or 11 comprising:
- providing a mechanism for adjusting length or tension of the wire.

13. The method according to any of the claims 10 to 12 comprising:
- providing a second actuator for rotating at least one of the discs.

14. The method according to any of the claims 10 to 13, wherein providing each of the blades with a first hole in middle of the blade, and passing one of the wires through the first hole.

15. The method according to any of the claims 10 to 14, wherein providing each of the blades with a blunt edge opposite to the sharp edge and a second hole near to the blunt edge, and passing one of the wires through the second hole.

## Patentansprüche

1. Vorrichtung (1) zum Schälen der Oberfläche eines Objekts (5), umfassend:
- eine elektromagnetische Stange (2), die Spulen umfasst, wobei die elektromagnetische Stange (2) angepasst ist, um durch das Objekt (5) über eine Achse (3) platziert zu werden, die durch eine Mitte des Objekts (5) verläuft;
- eine erste Scheibe (4), die eine Nut (16) aufweist, um einen Zugang zu der elektromagnetischen Stange (1) in die erste Scheibe (4) zu ermöglichen, und wobei sich ein oder mehrere Drähte (6) von der ersten Scheibe (4) erstrecken;
- einen Satz von Klingen (7) aus ferromagnetischem Material mit einer scharfen Kante (8), wobei der Satz von Klingen (7) in unmittelbarer Nähe zueinander angeordnet und durch einen oder mehrere Drähte (6) gebunden ist, die durch die Klingen (7) verlaufen, wobei die Klingen (7) so angeordnet sind, dass die scharfen Kanten (8) tangential zu einer Oberfläche des Objekts (5) angeordnet werden können;
- eine zweite Scheibe (9), die einen oder mehrere Drähte (6) aufnimmt, die sich von der ersten Scheibe (4) erstrecken und durch den Satz von Schaufeln (7) verlaufen; und
- eine Stromquelle (10), die mit dem elektromagnetischen Stab (2) verbunden ist und dazu ausgelegt ist, den Spulen Strom zuzuführen, wobei die Spulen ein elektromagnetisches Feld in dem elektromagnetischen Stab (2) erzeugen, so dass der elektromagnetische Stab (2) den Satz von Klingen (7) zu sich selbst zieht,
wobei die erste Scheibe (4) und die zweite Scheibe (9) so drehbar sind, dass die Blätter (7) auch zusammen mit den Scheiben (4, 9) gedreht werden und so angepasst sind, dass sie eine Haut von der Oberfläche des Objekts (5) ablösen.

2. Die Vorrichtung (1) nach dem Anspruch 1, wobei die zweite Scheibe (9) angepasst ist, um entsprechend einer Größe des Objekts (5) eingestellt zu werden.

3. Die Vorrichtung (1) nach Anspruch 2 umfassend ein erstes Stellglied (17), das angepasst ist, um die zweite Scheibe (9) entsprechend der Größe des Objekts (5) einzustellen.

4. Die Vorrichtung nach einem der Ansprüche 1 bis 3 umfassend einen Mechanismus (11), der angepasst ist, um die Spannung oder Länge des Drahtes (6) einzustellen.

5. Die Vorrichtung (1) nach einem der Ansprüche 1 bis 4 umfassend ein zweites Stellglied (12), das geeignet ist, mindestens eine der Scheiben (4, 9) zu drehen.

6. Die Vorrichtung (1) nach einem der Ansprüche 1 bis 5, wobei jedes der Blätter (7) ein erstes Loch (13) in der Mitte des Blattes (7) aufweist und einer der Drähte (6) durch das erste Loch (13) verläuft.

7. Die Vorrichtung (1) nach einem der Ansprüche 1 bis 6, wobei die Klinge (7) eine stumpfe Kante (14) gegenüber der scharfen Kante (8) und ein zweites Loch (15) nahe der stumpfen Kante (14) umfasst, und einer der Drähte (6) durch das zweite Loch (15) verläuft.

8. Die Vorrichtung (1) nach einem der Ansprüche 1 bis 7, wobei die Dicke der Blätter (7) weniger als 2 mm beträgt.

9. Vorrichtung (1) nach Anspruch 8, wobei die Dicke der Blätter (7) zwischen 1 mm und 2 mm liegt.

10. Verfahren zur Herstellung einer Vorrichtung (1) zum Schälen der Oberfläche eines Objekts (5), wobei das Verfahren umfasst:
- Bereitstellen eines Satzes von Klingen (7) mit einer scharfen Kante (8);
- Zusammenbau des Messersatzes (7) parallel und in engem Abstand zueinander, so dass scharfe Kanten (8) aller Messer (7) übereinander liegen und die scharfen Kanten (8) tangential zu einer Oberfläche des Objekts (5) beim Schälen platziert werden können;
- Binden des Satzes von Klingen (7) unter Verwendung von mindestens einem Draht (6), indem die Drähte (6) durch eines der Löcher (13, 15) auf den Klingen (7) geführt werden;
- Bereitstellen einer ersten Scheibe (4), die drehbar ist und eine Nut (16) aufweist, und Anordnen der ersten Scheibe (4) auf einer Unterseite des Messersatzes (7);
- Bereitstellen einer zweiten Scheibe (9), die verstellbar und drehbar ist, und Anordnen der zweiten Scheibe (9) auf der Oberseite des Messersatzes (7);
- Verlängern der Drähte (6) von der ersten Scheibe (4) zur zweiten Scheibe durch Löcher (13, 15) der Blätter (7);
- Bereitstellen eines elektromagnetischen Stabes, der Spulen umfasst, wobei der elektromagnetische Stab angepasst ist, um durch das Objekt über eine Achse, die durch eine Mitte des Objekts verläuft, platziert zu werden, und der elektromagnetische Stab ferner angepasst ist, um in die Nut platziert zu werden; und
- Bereitstellen einer Stromquelle und Verbinden derselben mit dem elektromagnetischen Stab, wobei die Stromquelle angepasst ist, um den Spulen Strom zuzuführen, die Spule ein elektromagnetisches Feld in dem elektromagnetischen Stab erzeugt, so dass der elektromagnetische Stab den Satz von Klingen zu sich selbst zieht,
wobei die erste Scheibe und die zweite Scheibe so gedreht werden können, dass die Blätter auch zusammen mit der Scheibe gedreht werden und so angepasst sind, dass sie eine Haut von der Oberfläche des Objekts ablösen.

11. Verfahren nach Anspruch 10, umfassend:
- Bereitstellen eines ersten Stellglieds zum Einstellen der zweiten Scheibe entsprechend der Größe des Objekts.

12. Verfahren nach einem der Ansprüche 10 oder 11, umfassend:
- Bereitstellen eines Mechanismus zum Einstellen der Länge oder Spannung des Drahtes.

13. Verfahren nach einem der Ansprüche 10 bis 12, umfassend:
- Bereitstellen eines zweiten Stellglieds zum Drehen mindestens einer der Scheiben.

14. Verfahren nach einem der Ansprüche 10 bis 13, wobei jedes der Blätter mit einem ersten Loch in der Mitte des Blattes versehen wird und einer der Drähte durch das erste Loch geführt wird.

15. Verfahren nach einem der Ansprüche 10 bis 14, wobei jedes der Blätter mit einer stumpfen Kante gegenüber der scharfen Kante und einem zweiten Loch nahe der stumpfen Kante versehen wird und einer der Drähte durch das zweite Loch geführt wird.

## Revendications

1. Dispositif (1) pour peler la surface d'un objet (5) comprenant :
- une barre électromagnétique (2) comprenant des bobines, dans laquelle la barre électromagnétique (2) est adaptée pour être placée à travers l'objet (5) via un axe (3) passant par un centre de l'objet (5) ;
- un premier disque (4) comprenant une rainure (16) pour permettre un accès à la tige électromagnétique (1) dans le premier disque (4), et étendant un ou plusieurs fils (6) du premier disque (4) ;
- un jeu de lames (7) en matériau ferromagnétique et ayant un bord tranchant (8), le jeu de lames (7) étant disposé à proximité l'une de l'autre et lié par un ou plusieurs fils (6) traversant les lames (7), dans lequel les lames (7) sont disposées de sorte que les bords tranchants (8) sont adaptés pour être placés tangentiellement à une surface de l'objet (5) ;
- un deuxième disque (9) recevant un ou plusieurs fils (6) s'étendant à partir du premier disque (4) et traversant l'ensemble des lames (7) ; et
- une source de courant (10) connectée à la barre électromagnétique (2) et adaptée pour fournir du courant aux bobines, les bobines génèrent un champ électromagnétique dans la barre électromagnétique (2), de sorte que la barre électromagnétique (2) tire l'ensemble des lames (7) vers elle-même,
dans laquelle le premier disque (4) et le second disque (9) sont adaptés pour être tournés de telle sorte que les lames (7) sont également tournées avec les disques (4, 9) et adaptés pour arracher une peau de la surface de l'objet (5).

2. Dispositif (1) selon la revendication 1, dans lequel le deuxième disque (9) est adapté pour être ajusté selon une taille de l'objet (5).

3. Dispositif (1) selon la revendication 2 comprenant un premier actionneur (17) adapté pour ajuster le deuxième disque (9) selon la taille de l'objet (5).

4. Dispositif selon l'une quelconque des revendications 1 à 3 comprenant un mécanisme (11) qui est adapté pour ajuster la tension ou la longueur du fil (6).

5. Dispositif (1) selon l'une quelconque des revendications 1 à 4 comprenant un second actionneur (12) adapté pour faire tourner au moins un des disques (4, 9).

6. Le dispositif (1) selon l'une quelconque des revendications 1 à 5, dans lequel chacune des lames (7) comprend un premier trou (13) au milieu de la lame (7) et un des fils (6) passe par le premier trou (13).

7. Dispositif (1) selon l'une quelconque des revendications 1 à 6, dans lequel la lame (7) comprend un bord émoussé (14) opposé au bord tranchant (8) et un deuxième trou (15) près du bord émoussé (14), et un des fils (6) passe par le deuxième trou (15).

8. Dispositif (1) selon l'une quelconque des revendications 1 à 7, dans lequel l'épaisseur des lames (7) est inférieure à 2 mm.

9. Dispositif (1) selon la revendication 8, dans lequel l'épaisseur des lames (7) est comprise entre 1 mm et 2 mm.

10. Procédé de fabrication d'un dispositif (1) pour peler la surface d'un objet (5), le procédé comprenant :
- fournir un jeu de lames (7) avec un bord tranchant (8) ;
- l'assemblage de l'ensemble de lames (7) en parallèle et à proximité l'une de l'autre, de telle sorte que les arêtes vives (8) de toutes les lames (7) sont superposées, et les arêtes vives (8) sont adaptées pour être placées tangentiellement à une surface de l'objet (5) tout en pelant ;
- lier l'ensemble de lames (7) à l'aide d'au moins un fil (6), en faisant passer les fils (6) à travers l'un des trous (13, 15) des lames (7) ;
- prévoir un premier disque (4) qui peut tourner et qui présente une rainure (16), et placer le premier disque (4) sur un côté inférieur de l'ensemble de lames (7) ;
- fournir un deuxième disque (9) qui est réglable et rotatif, et placer le deuxième disque (9) sur la face supérieure de l'ensemble de lames (7) ;
- l'extension des fils (6) du premier disque (4) au deuxième disque par des trous (13, 15) des lames (7) ;
- fournir une barre électromagnétique comprenant des bobines, dans lequel la barre électromagnétique est adaptée pour être placée à travers l'objet via un axe passant par un centre de l'objet, et la barre électromagnétique est en outre adaptée pour être placée dans la rainure ; et
- en fournissant une source de courant et en la connectant à la barre électromagnétique, la source de courant est adaptée pour fournir du courant aux bobines, la bobine génère un champ électromagnétique dans la barre électromagnétique, de sorte que la barre électromagnétique tire l'ensemble des lames vers elle-même,
dans laquelle le premier disque et le second disque sont adaptés pour être tournés de telle sorte que les lames sont également tournées avec le disque et adaptés pour arracher une peau de la surface de l'objet.

11. Procédé selon la revendication 10 comprenant :
- un premier actionneur pour ajuster le deuxième disque en fonction de la taille de l'objet.

12. Procédé selon l'une quelconque des revendications 10 ou 11 comprenant :
- un mécanisme de réglage de la longueur ou de la tension du fil.

13. Procédé selon l'une quelconque des revendications 10 à 12 comprenant :
- avec un deuxième actionneur pour la rotation d'au moins un des disques.

14. Procédé selon l'une quelconque des revendications 10 à 13, dans lequel on munit chacune des lames d'un premier trou au milieu de la lame, et on fait passer un des fils à travers le premier trou.

15. Procédé selon l'une quelconque des revendications 10 à 14, dans lequel on fournit à chacune des lames un bord émoussé opposé au bord tranchant et un second trou près du bord émoussé, et on fait passer un des fils à travers le second trou.
